# FASCICULE DE BREVET EUROPEEN

(11) **EP 1 820 670 B1**
(45) Date de publication et mention de la délivrance du brevet: **05.01.2011**
(21) Numéro de dépôt: 07102345.1
(22) Date de dépôt: 14.02.2007
(51) Int. Cl.: B60C 11/24

(54) **Ensemble de roue et de pneumatique et procédé de mesure en dynamique de paramètres topologiques de la surface interne de la partie pertinente du pneumatique**
Rad-Reifen-Einheit und Verfahren zur dynamischen Messung der topologischen Parameter der Innenfläche des relevanten Teils des Reifens
Wheel and tyre set and method of dynamically measuring topological parameters on the internal surface of the relevant part of the tyre

(30) Priorité: 15.02.2006 FR 0601331
(43) Date de publication de la demande: 22.08.2007
(73) Titulaire: Société de Technologie Michelin, 63000 Clermont-Ferrand (FR); Michelin Recherche et Technique S.A., 1763 Granges-Paccot (CH)
(72) Inventeur: Muhlhoff, Olivier, 63100, Clermont-Ferrand (FR); Chabry, Marc, 63000, Clermont-Ferrand (FR)
(74) Mandataire: Dequire, Philippe Jean-Marie Denis

(56) Documents cités:
- US-A1- 2002 036 039
- US-A1- 2003 050 743
- US-A1- 2003 167 832
- US-B1- 6 367 884
- US-B1- 6 609 417

## Description

La présente invention concerne un ensemble de roue et de pneumatique et un procédé de mesure en dynamique de paramètres topologiques de la surface interne de la partie pertinente du pneumatique.

On souhaite contrôler de plus en plus efficacement le comportement routier d'un véhicule automobile. A cet effet, on souhaite notamment pouvoir mesurer de plus en plus précisément les déformations des pneumatiques du véhicule en cours de roulage afin de contrôler le contact entre le sol et les pneumatiques et évaluer des paramètres susceptibles de caractériser le comportement routier du véhicule.

On connaît déjà dans l'état de la technique, notamment d'après US 2003/0050743 A1 ou US 6 367 884, un ensemble de roue et de pneumatique destiné à rouler sur un sol, du type comprenant des moyens, portés par la roue, de mesure de paramètres topologiques de la surface interne d'une partie pertinente du pneumatique.

Généralement la partie pertinente du pneumatique est celle en contact avec le sol et est habituellement appelée empreinte.

Les moyens de mesure de paramètres topologiques décrits dans US 2003/0050743 A1 comprennent un organe formant émetteur/récepteur, porté par la roue, destiné, d'une part, à émettre un signal incident vers la surface interne de la partie pertinente du pneumatique et, d'autre part, à détecter un signal réfléchi par un élément réfléchissant (de forme générale ponctuelle), porté par la surface interne, ou réfléchi par la surface interne elle-même.

Pour déterminer les éventuelles modifications de la forme (en trois dimensions) et de l'orientation de l'empreinte du pneumatique par rapport à un référentiel lié à la roue, les moyens de mesure de paramètres topologiques décrits dans US 2003/0050743 A1 requièrent d'intégrer de nombreuses mesures dont les imprécisions s'accumulent en nuisant ainsi à la fiabilité des résultats.

L'invention a notamment pour but de faciliter et d'optimiser la fiabilité de la détermination des modifications de forme (en trois dimensions) et d'orientation de l'empreinte d'un pneumatique, ceci à l'aide de moyens susceptibles d'être embarqués dans l'ensemble de roue et de pneumatique.

A cet effet, l'invention a pour objet un ensemble de roue et de pneumatique destiné à rouler sur un sol, du type précité, en particulier les préambules des revendications 1 et 7 sont en accord avec les caractéristiques du document US 6 367 884, **caractérisé en ce que** les moyens de mesure comprennent des moyens d'éclairage et de vision d'un motif surfacique étalonné assujetti aux déformations de la surface interne de la partie pertinente du pneumatique.

Le motif surfacique étalonné présente une position connue, par rapport à un référentiel lié à la roue, ainsi que des dimensions connues lorsque le pneumatique est dans un état de référence prédéterminé.

Les moyens d'éclairage et de vision de ce motif surfacique étalonné permettent d'obtenir des images pouvant être facilement traitées, éventuellement par comparaison entre elles, pour déterminer les éventuelles modifications de la forme (trois dimensions) et de l'orientation de l'empreinte du pneumatique par rapport à un référentiel lié à la roue.

L'exploitation d'une image qui correspond à la réalisation d'une mesure permet de déduire de nombreux paramètres topologiques pertinents de l'empreinte du pneumatique.

Ainsi, le traitement des images permet de déduire notamment les paramètres habituels suivants :
- l'angle de carrossage,
- le déport latéral,
- le déport longitudinal,
- la flèche,
- la torsion de l'empreinte par rapport à l'axe de la roue,
- etc.

Le traitement des images permet également de détecter et/ou quantifier les manifestations suivantes :
- le cloquage de la gomme intérieure du pneumatique,
- l'hydroplanage,
- les cahots,
- les déformations des flancs du pneumatique,
- etc.

Suivant d'autres caractéristiques optionnelles de différents modes de réalisation de cet ensemble de roue et de pneumatique :
- les moyens d'éclairage et de vision comprennent au moins une caméra vidéo, portée par la roue, pour l'acquisition d'images définies par une matrice de pixels ;
- la caméra vidéo fonctionne en mode « full frame », c'est-à-dire un mode dans lequel tous les pixels de la matrice de pixels sont impressionnés simultanément ;
- l'ensemble comprend des moyens de détection du contact de la partie pertinente du pneumatique avec le sol, par exemple du type à détection de verticalité ou à détection d'azimut du pneumatique ;
- le motif surfacique étalonné est un motif non lumineux, mais éventuellement réfléchissant, agencé sur la surface interne de la partie pertinente du pneumatique ;
- la caméra vidéo est munie d'un objectif de focale adaptée à la taille du pneumatique, de préférence une focale courte ;
- les moyens d'éclairage et de vision sont du type à stéréovision et comprennent deux caméras vidéo d'axes optiques convergeant vers le motif surfacique étalonné, ces axes optiques formant par exemple entre eux un angle de 60° ;
- les moyens d'éclairage et de vision comprennent une source de lumière choisie parmi une source laser et une diode électroluminescente formant flash, ou tout autre moyen approprié ;
- le motif est choisi parmi un damier et un mouchetis formé par un ensemble de points répartis de façon irrégulière ;
- les moyens d'éclairage et de vision sont du type à lumière structurée et comprennent des moyens de projection, sur la surface interne de la partie pertinente du pneumatique, d'un motif lumineux formant le motif surfacique étalonné ;
- la surface interne de la partie pertinente du pneumatique est munie de marqueurs, par exemple de trois marqueurs en forme générale chacun de calotte sphérique ;
- le motif lumineux comprend une alternance de franges claires et sombres ;
- la matrice de pixels comprend des lignes ou colonnes de pixels parallèles ou inclinées, de préférence à 45°, par rapport aux franges.
- les moyens d'éclairage et de vision sont adaptés pour émettre un éclair d'une durée inférieure à 10 µs.

L'invention a également pour objet un procédé de mesure en dynamique de paramètres topologiques de la surface interne de la partie pertinente du pneumatique d'un ensemble de roue et de pneumatique tel que défini ci-dessus, **caractérisé en ce que** l'on mesure des déformations de la surface interne de la partie pertinente du pneumatique à l'aide des moyens d'éclairage et de vision du motif surfacique étalonné.

Suivant d'autres caractéristiques optionnelles de différents modes de réalisation de ce procédé :
- on pilote les moyens d'éclairage et de vision à l'aide des moyens de détection du contact de la partie pertinente du pneumatique avec le sol ;
- on pilote les moyens de projection à l'aide des moyens de détection du contact de la partie pertinente du pneumatique avec le sol ;
- on fait fonctionner la caméra en mode synchrone, c'est-à-dire à fréquence d'acquisition d'images constante, indépendante de la position et de la vitesse de rotation de la roue ;
- on trie les images acquises en éliminant celles sans le motif ;
- on fait fonctionner la caméra en mode asynchrone, c'est-à-dire à fréquence variable d'acquisition d'images pilotée directement ou indirectement en fonction de la position ou de la vitesse de la roue.

L'invention sera mieux comprise à la lecture de la description qui va suivre, donnée uniquement à titre d'exemple et faite en se référant aux dessins annexés dans lesquels :
- la figure 1 est une demi-vue en coupe axiale d'un ensemble de roue et de pneumatique selon un premier mode de réalisation de l'invention ;
- la figure 2 est une vue schématique des moyens d'éclairage et de vision de l'ensemble de roue et de pneumatique de la figure 1 ;
- la figure 3 est une vue de face du motif surfacique étalonné de l'ensemble de roue et de pneumatique de la figure 1 ;
- la figure 4 est une vue schématique des moyens d'éclairage et de vision d'un ensemble de roue et de pneumatique selon un second mode de réalisation de l'invention.

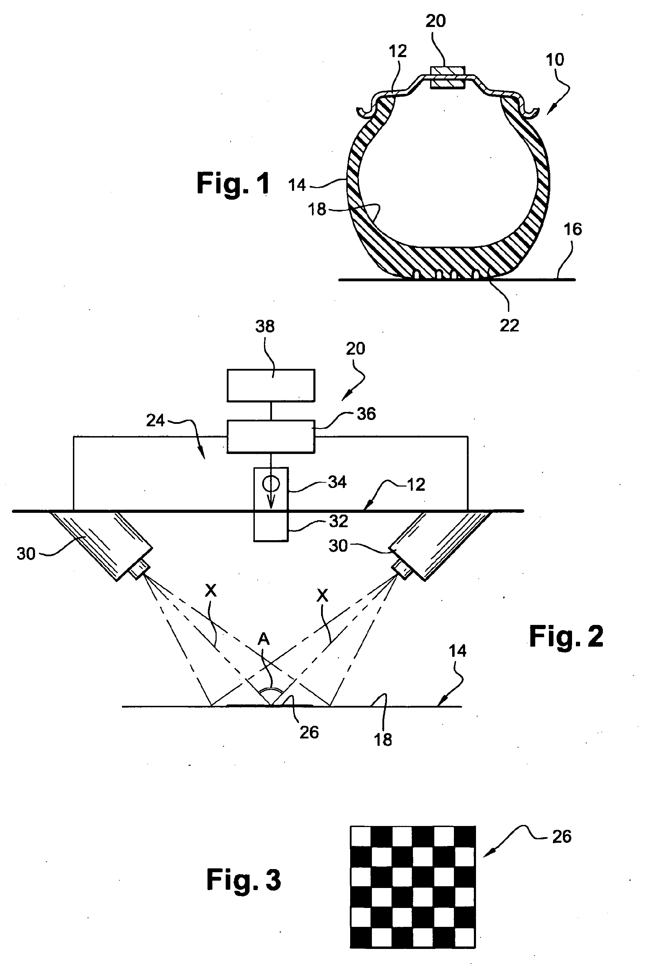

On a représenté sur les figures 1 et 2 un ensemble de roue et de pneumatique selon un premier mode de réalisation de l'invention, désigné par la référence générale 10. Cet ensemble 10 est relié à un châssis de véhicule (non représentée) à l'aide de moyens classiques.

De façon classique, l'ensemble 10 comprend une roue métallique 12 sur laquelle est monté un pneumatique 14 destiné à rouler sur un sol 16.

De façon classique également, le pneumatique 14 est muni d'une couche de gomme intérieure délimitant une surface interne 18 du pneumatique.

L'ensemble 10 comprend des moyens 20, portés par la roue 12, destinés à mesurer des paramètres topologiques de la surface interne 18 d'une partie pertinente 22 du pneumatique 14. La partie pertinente 22 du pneumatique 14 est la partie du pneumatique en contact avec le sol 16. Cette partie pertinente 22 du pneumatique est généralement appelée empreinte.

Les moyens de mesure 20 sont fixés de façon connue en soi sur la roue 12, de préférence dans une gorge annulaire sensiblement centrale de cette roue 12.

Comme on peut le voir sur la figure 2, dans laquelle les moyens de mesure 20 sont représentés plus en détail, ces moyens 20 comprennent des moyens 24 d'éclairage et de vision d'un motif surfacique 26.

Ce motif surfacique 26 est étalonné, c'est-à-dire que, lorsque le pneumatique 14 est dans un état de référence prédéterminé, sa position par rapport à un référentiel lié à la roue 12 est connue et ses dimensions sont connues.

Le motif 26 comprend une alternance de zones claires et sombres. Le motif 26 peut être, par exemple, un damier, comme cela est représenté sur la figure 3. En variante, le motif 26 peut être un mouchetis formé par un ensemble de points clairs répartis de façon irrégulière.

Dans le premier mode de réalisation de l'invention, le motif 26 est un motif non lumineux agencé sur la surface interne 18 du pneumatique 14.

Le motif 26 est formé ou rapporté sur la surface interne 18 du pneumatique de façon à être assujetti aux déformations de la surface interne 18 de l'empreinte 22.

Dans le premier mode de réalisation de l'invention, les moyens d'éclairage et de vision 24 sont du type à stéréovision et comprennent deux caméras vidéo 30, de type classique, fixées de façon connue en soi sur la roue 12. Les axes optiques X des deux caméras 30 convergent vers le motif surfacique étalonné 26. Les deux axes optiques X forment entre eux un angle A par exemple de 60°.

Chaque caméra vidéo 30 est destinée à acquérir des images définies par une matrice de pixels par exemple de 500 lignes et 582 colonnes pour un champ d'observation de 100x100 mm².

Chaque caméra fonctionne en mode « full frame », c'est-à-dire que tous les pixels de la matrice de pixels sont impressionnés simultanément, à la manière d'une pellicule photographique. Le mode « full frame » s'oppose au mode « balayage », dans lequel les pixels sont balayés successivement par trames paires et impaires.

Les moyens d'éclairage et de vision 24 comprennent également une source de lumière 32 d'éclairage du motif 26 afin que les caméras 30 puissent recevoir les images réfléchies de ce motif 26. La source de lumière 32 est choisie par exemple parmi une diode électroluminescente, une source laser et tout autre moyen approprié formant flash.

L'ensemble 10 comprend également des moyens classiques 34 de détection du contact de la partie pertinente 22 du pneumatique avec le sol 16. Les moyens de détection 34 sont par exemple du type à détection de verticalité, notamment par effet Hall. Les moyens de détection 34 peuvent également être des moyens de détection de l'azimut du pneumatique au cours de sa rotation.

Les deux caméras 30, la source de lumière 32 et les moyens de détection 34 sont reliés à un calculateur 36 comprenant par exemple un circuit intégré à application spécifique généralement désigné par l'acronyme anglais ASIC.

Le calculateur 36 est relié à des moyens classiques 38 de stockage de données.

De préférence, les moyens de détection 34, le calculateur 36 et les moyens de stockage de données 38 sont agencés de façon connue en soi sur la roue 12. En variante, les moyens de stockage de données 38, voire également le calculateur 36, peuvent être agencés dans le châssis du véhicule auquel est relié l'ensemble 10. Dans ce cas, des moyens classiques de transmission de données sont prévus entre les moyens de mesure portés par l'ensemble 10 et des moyens de traitement et de stockage de données portés par le châssis du véhicule.

Les moyens de mesure 20 décrits ci-dessus permettent de mettre en oeuvre un premier mode de réalisation d'un procédé selon l'invention pour la mesure en dynamique de paramètres topologiques de la surface interne 18 de la partie pertinente 22 du pneumatique 14.

Conformément à ce procédé, on mesure des déformations de la surface interne 18 de l'empreinte 22 à l'aide des moyens 24 d'éclairage et de vision du motif surfacique étalonné 26.

De préférence :
- on pilote la source de lumière 32 (de façon à l'activer ou la désactiver) à l'aide des moyens 34 de détection du contact de la partie pertinente 22 du pneumatique 14 avec le sol 16, et
- on fait fonctionner chaque caméra 30 en mode synchrone, c'est-à-dire à une fréquence d'acquisition d'images constante, indépendante de la position et de la vitesse de rotation de la roue 12.

En effet, dans ces conditions, en choisissant par exemple une fréquence d'acquisition d'images de l'ordre de 60 images par seconde, la probabilité que l'empreinte 22 en contact avec le sol soit dans le champ de vision des caméras 30 lorsque ces dernières acquièrent une image et que les moyens d'éclairage 32 sont activés est élevée, ceci pour des vitesses du véhicule pouvant atteindre 430 km/h et pour une circonférence interne du pneumatique 14 de l'ordre de 2 m.

La source de lumière permet d'émettre des flashs de très faible durée, inférieure à 10 µs (micro-seconde), lors de mesures effectuées en dynamique à haute vitesse. En effet, le temps de séjour dans l'aire de contact ou l'empreinte est de l'ordre de quelques msec (milli-seconde). Les images de la caméra sont ainsi nettes et dépouillables.

Au delà d'une certaine vitesse de rotation du pneumatique, il est possible que le pneumatique fasse plus d'un tour sur lui-même entre deux images successivement acquises par la caméra. Dans ce cas, il est préférable de limiter la fréquence d'activation de la source de lumière 32 à une valeur inférieure à la fréquence d'acquisition d'images de la caméra pour ne pas que des images du motif surfacique étalonné 26 ne se superposent.

Les images acquises par les caméras 30 peuvent être facilement triées. En effet, les images acquises lorsque les moyens d'éclairage 32 sont désactivés sont facilement identifiables (absence de motif) et peuvent donc être facilement éliminées pour ne conserver que celles utiles aux mesures, acquises lorsque les moyens d'éclairage 32 sont activés.

En variante, on peut faire fonctionner chaque caméra 30 en mode asynchrone, c'est-à-dire à une fréquence variable d'acquisition d'images pilotée directement ou indirectement en fonction de la position ou de la vitesse de la roue 12, par exemple en fonction de la détection du contact de la partie pertinente 22 du pneumatique 14 avec le sol 16 par les moyens 34.

Les images acquises par les caméras 30 sont traitées par le calculateur 36 conformément aux principes classiques habituellement utilisés avec des moyens d'éclairage et de vision du type à stéréovision.

En variante, les deux caméras vidéo 30 destinées à fonctionner en stéréovision peuvent être remplacées par une caméra vidéo unique munie d'un objectif de focale courte. En effet, une caméra vidéo à focale courte permet d'obtenir, mutatis mutandis, des informations similaires à celles obtenues au moyen des deux caméras 30 fonctionnant en stéréovision.

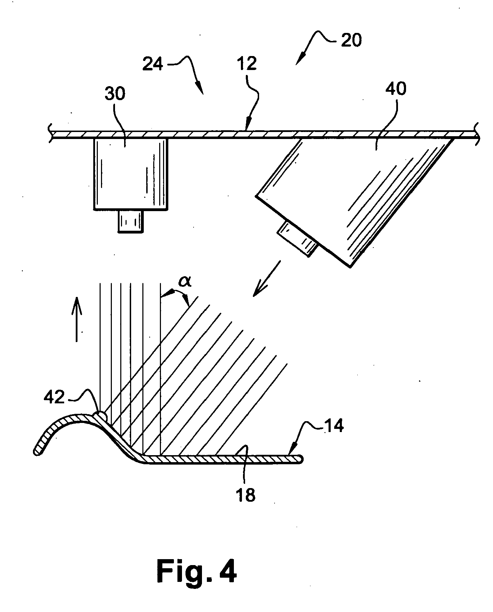

Sur la figure 4, on a représenté des moyens de vision 24 d'un ensemble 10 de roue et de pneumatique selon un second mode de réalisation de l'invention. Sur cette figure 4, les éléments analogues à ceux des figures précédentes sont désignés par des références identiques.

Dans ce second mode de réalisation de l'invention, les moyens de vision 24 sont du type à lumière structurée et comprennent des moyens classiques 40 de projection, sur la surface interne 18 de la partie pertinente 22 du pneumatique 14, d'un motif lumineux formant le motif surfacique étalonné.

De préférence, le motif lumineux comprend une alternance de franges claires et sombres, de mêmes largeurs, par exemple au nombre de 50 au total.

Par ailleurs, les moyens de vision comprennent une caméra unique 30 destinée à acquérir des images définies par une matrice de pixels comprenant par exemple 750 lignes et 580 colonnes pour un champ d'observation de 100x150 mm².

Conformément aux principes classiques de mise en oeuvre de lumière structurée, le faisceau de projection du motif et le faisceau réfléchi par la surface interne 18 recueilli par la caméra 30 forme un angle α.

Les lignes ou colonnes de la matrice de pixels de la caméra 30 peuvent être parallèles aux franges du motif. En variante, les lignes ou colonnes de pixels de la matrice peuvent être inclinées à 45° par rapport aux franges du motif, de façon à ce que la précision des mesures issues des images acquises par la caméra 30 soit homogène dans les deux directions, longitudinale et transversale, du motif à franges.

De préférence, la surface interne 18 de la partie pertinente 22 du pneumatique est munie de marqueurs 42, par exemple au nombre de trois (un seul marqueur 42 est représenté sur la figure 4). Ces marqueurs 42 ont par exemple chacun une forme générale de calotte sphérique et permettent de caler les images acquises lors de leur traitement pour réaliser notamment des comparaisons d'images, plus particulièrement des soustractions d'images.

Les moyens de mesure 20 représentés sur la figure 4 permettent de mettre en oeuvre un second mode de réalisation du procédé selon de l'invention pour la mesure en dynamique de paramètres topologiques de la surface interne 18 de la partie pertinente 22 du pneumatique.

Conformément à ce procédé, on pilote les moyens de projection 20 (de façon à les activer ou les désactiver) à l'aide des moyens de détection 34.

De façon analogue au premier mode de réalisation de l'invention, on peut faire fonctionner la caméra 30 en mode synchrone ou asynchrone.

Comme dans le premier procédé de mise en oeuvre de l'invention, les moyens de projection doivent être adaptés pour projeter le motif pendant une durée très courte, inférieure à 10 µs pour permettre d'obtenir des images nettes et dépouillables.

Les images acquises par la caméra 30 sont traitées conformément aux principes classiques habituellement utilisés avec des moyens de vision du type à lumière structurée.

## Revendications

1. Ensemble de roue (12) et de pneumatique (14) destiné à rouler sur un sol (16), du type comprenant des moyens (20), portés par la roue (12), de mesure de paramètres topologiques de la surface interne (18) d'une partie pertinente (22) du pneumatique (14), **caractérisé en ce que** les moyens de mesure (20) comprennent des moyens (24) d'éclairage et de vision d'un motif surfacique étalonné (26) assujetti aux déformations de la surface interne (18) de la partie pertinente (22) du pneumatique (14), le motif surfacique étalonné (26) étant un motif non lumineux, mais éventuellement réfléchissant, agencé sur la surface interne (18) de la partie pertinente (22) du pneumatique (14), et les moyens (24) d'éclairage et de vision étant du type à stéréovision (24) comprenant deux caméras vidéo (30) portées par la roue (12) pour l'acquisition d'images définies par une matrice de pixels, les axes optiques (X) des deux caméras convergeant vers le motif surfacique étalonné (26) en formant par exemple entre eux un angle (A) de 60°.

2. Ensemble de roue (12) et de pneumatique (14) selon la revendication 1, dans lequel la caméra vidéo (30) fonctionne en mode « full frame », c'est-à-dire un mode dans lequel tous les pixels de la matrice de pixels sont impressionnés simultanément.

3. Ensemble de roue (12) et de pneumatique (14) selon l'une quelconque des revendications 1 à 2, comprenant des moyens (34) de détection du contact de la partie pertinente (22) du pneumatique (14) avec le sol (16), par exemple du type à détection de verticalité ou à détection d'azimut du pneumatique.

4. Ensemble de roue (12) et de pneumatique (14) selon l'une quelconque des revendications précédentes, dans lequel la caméra vidéo (30) est munie d'un objectif de focale adaptée à la taille du pneumatique, de préférence une focale courte.

5. Ensemble de roue (12) et de pneumatique (14) selon l'une quelconque des revendications précédentes, dans lequel les moyens (24) d'éclairage et de vision comprennent une source de lumière (32) choisie parmi une source laser et une diode électroluminescente formant flash.

6. Ensemble de roue (12) et de pneumatique (14) selon l'une quelconque des revendications précédentes, dans lequel le motif (26) est choisi parmi un damier et un mouchetis formé par un ensemble de points répartis de façon irrégulière.

7. Ensemble de roue (12) et de pneumatique (14) destiné à rouler sur un sol (16), du type comprenant des moyens (20), portés par la roue (12), de mesure de paramètres topologiques de la surface interne (18) d'une partie pertinente (22) du pneumatique (14), **caractérisé en ce que** les moyens de mesure (20) comprennent des moyens (24) d'éclairage et de vision d'un motif surfacique étalonné (26) assujetti aux déformations de la surface interne (18) de la partie pertinente (22) du pneumatique (14), les moyens (24) d'éclairage et de vision étant du type à lumière structurée et comprenant des moyens (40) de projection, sur la surface interne (18) de la partie pertinente (22) du pneumatique (14), d'un motif lumineux formant le motif surfacique étalonné (26).

8. Ensemble de roue (12) et de pneumatique (14) selon la revendication 7, dans lequel la surface interne (18) de la partie pertinente (22) du pneumatique (14) est munie de marqueurs (42), par exemple de trois marqueurs en forme générale chacun de calotte sphérique.

9. Ensemble de roue (12) et de pneumatique (14) selon la revendication 7 ou 8, dans lequel le motif lumineux comprend une alternance de franges claires et sombres.

10. Ensemble de roue (12) et de pneumatique (14) selon la revendication précédente, dans lequel les moyens (24) d'éclairage et de vision comprennent au moins une caméra vidéo (30), portée par la roue (12), pour l'acquisition d'images définies par une matrice de pixels comprenant des lignes ou colonnes de pixels parallèles ou inclinées, de préférence à 45°, par rapport aux franges.

11. Ensemble de roue (12) et de pneumatique (14) selon l'une quelconque des revendications précédentes, dans laquelle les moyens d'éclairage et de vision sont adaptés pour émettre un éclair d'une durée inférieure à 10 µs.

12. Procédé de mesure en dynamique de paramètres topologiques de la surface interne (18) de la partie pertinente (22) du pneumatique (14) d'un ensemble selon l'une quelconque des revendications précédentes, **caractérisé en ce que** l'on mesure des déformations de la surface interne (18) de la partie pertinente (22) du pneumatique (14) à l'aide des moyens (24) d'éclairage et de vision du motif surfacique étalonné (26).

13. Procédé selon la revendication 12 pour la mesure de paramètres topologiques de la surface interne (18) de la partie pertinente (22) du pneumatique (14) d'un ensemble selon les revendications 3 et 8 prises ensemble, dans lequel on pilote la source de lumière (32) à l'aide des moyens (34) de détection du contact de la partie pertinente (22) du pneumatique (14) avec le sol.

14. Procédé selon la revendication 12 pour la mesure de paramètres topologiques de la surface interne (18) de la partie pertinente (22) du pneumatique (14) d'un ensemble selon les revendications 4 et 9 prises ensemble, dans lequel on pilote les moyens de projection (40) à l'aide des moyens (34) de détection du contact de la partie pertinente (22) du pneumatique (14) avec le sol.

15. Procédé selon l'une quelconque des revendications 12 à 14 pour la mesure de paramètres topologiques de la surface interne (18) de la partie pertinente (22) du pneumatique (14) d'un ensemble selon la revendication 1, dans lequel on fait fonctionner la caméra (30) en mode synchrone, c'est-à-dire à fréquence d'acquisition d'images constante, indépendante de la position et de la vitesse de rotation de la roué (12).

16. Procédé selon la revendication 13 ou 14 prise en combinaison avec la revendication 15, dans lequel on trie les images acquises en éliminant celles sans le motif.

17. Procédé selon l'une quelconque des revendications 12 à 14 pour la mesure de paramètres topologiques de la surface interne (18) de la partie pertinente (22) du pneumatique (14) d'un ensemble selon la revendication 1, dans lequel on fait fonctionner la caméra (30) en mode asynchrone, c'est-à-dire à fréquence variable d'acquisition d'images pilotée directement ou indirectement en fonction de la position ou de la vitesse de la roue (12).

## Claims

1. A wheel and tire assembly (12 and 14) for running on ground (16), the assembly being of the type including measurement means (20) carried by the wheel (12) for measuring topological parameters of the inside surface (18) of a pertinent portion (22) of the tire (14), the assembly being **characterized in that** the measurement means (20) comprise lighting and viewing means (24) for lighting and viewing a calibrated surface pattern (26) that is subjected to the deformation of the inside surface (18) of the pertinent portion (22) of the tire (14), the calibrated surface pattern (26) being a non-luminous pattern, but possibly a reflective pattern, arranged on the inside surface (18) of the pertinent portion (22) of the tire (14), and the lighting and viewing means (24) being of the stereovision type (24) and comprising two video cameras (30) having optical axes (X) that converge towards the calibrated surface pattern (26), said optical axes (X) forming between them an angle (A) of 60°, for example.

2. A wheel and tire assembly (12 and 14) according to claim 1, in which the video camera (30) operates in "full-frame" mode, i.e. in a mode in which all of the pixels in the array of pixels are exposed simultaneously.

3. A wheel and tire assembly (12 and 14) according to any one of claims 1 and 2, including detector means (34) for detecting contact between the pertinent portion (22) of the tire (14) and the ground (16), e.g. means of the type for detecting the vertical direction or for detecting the azimuth of the tire.

4. A wheel and tire assembly (12 and 14) according to any one of preceding claims, in which the video camera (30) is provided with a lens of focal length adapted to the size of the tire, and preferably of short focal length.

5. A wheel and tire assembly (12 and 14) according to any one of preceding claims, in which the lighting and viewing means (24) include a light source (32) selected from a flash-forming laser source and LED.

6. A wheel and tire assembly (12 and 14) according to any one of preceeding claims, in which the pattern (26) is selected from a checkerboard and a speckle pattern formed by a set of dots distributed in irregular manner.

7. A wheel and tire assembly (12 and 14) for running on ground (16), the assembly being of the type including measurement means (20) carried by the wheel (12) for measuring topological parameters of the inside surface (18) of a pertinent portion (22) of the tire (14), the assembly being **characterized in that** the measurement means (20) comprise lighting and viewing means (24) for lighting and viewing a calibrated surface pattern (26) that is subjected to the deformation of the inside surface (18) of the pertinent portion (22) of the tire (14), the lighting and viewing means (24) being of the structured light type and including projection means (40) for projecting a light pattern onto the inside surface (18) of the pertinent portion (22) of the tire (14), the light pattern forming the calibrated surface pattern (26).

8. A wheel and tire assembly (12 and 14) according to claim 7, in which the inside surface (18) of the pertinent portion (22) of the tire (14) is provided with markers (42), e.g. three markers each generally in the form of a spherical cap.

9. A wheel and tire assembly (12 and 14) according to claim 7 or claim 8, in which the light pattern comprises alternating pale and dark fringes.

10. A wheel and tire assembly (12 and 14) according to claim 9, in which the lighting and viewing means comprise at least a video camera (30) carried by the wheel (12), for the acquisition of images comprising rows or columns of pixels that are parallel to the fringes or inclined relative thereto, preferably at 45°.

11. A wheel and tire assembly (12 and 14) according to any preceding claim, in which the lighting and viewing means are adapted to emit a flash of duration shorter than 10 µs.

12. A method of dynamically measuring topological parameters of the inside surface (18) of the pertinent portion (22) of the tire (14) in an assembly according to any preceding claim, the method being **characterized by** measuring the deformations of the inside surface (18) of the pertinent portion (22) of the tire (14) with the help of the lighting and viewing means (34) lighting and viewing the calibrated surface pattern (26).

13. A method according to claim 12 for measuring topological parameters of the inside surface (18) of the pertinent portion (22) of the tire (14) of an assembly according to claims 3 and 8 taken together, in which the light source (32) is controlled with the help of the detector means (34) for detecting contact between the pertinent portion (22) of the tire (14) and the ground.

14. A method according to claim 12 for measuring topological parameters of the inside surface (18) of the pertinent portion (22) of the tire (14) of an assembly according to claims 4 and 9 taken together, in which the projection means (40) are controlled with the help of the detector means (34) for detecting contact between the pertinent portion (22) of the tire (14) and the ground.

15. A method according to any one of claims 12 to 14, for measuring topological parameters of the inside surface (18) of the pertinent portion (22) of the tire (14) of an assembly according to claim 1, in which the camera (30) is operated in synchronous mode, i.e. at a constant image acquisition frequency that is independent of the position and the speed of rotation of the wheel (12).

16. A method according to claim 13 or claim 14 taken in combination with claim 15, in which the images acquired are sorted by eliminating images that do not include the pattern.

17. A method according to any one of claims 12 to 14 for measuring topological parameters of the inside surface (18) of the pertinent portion (22) of the tire (14) of an assembly according to claim 1, in which the camera (30) is operated in asynchronous mode, i.e. with image acquisition at a variable frequency controlled directly or indirectly as a function of the position or the speed of the wheel (12).

## Patentansprüche

1. Einheit aus Rad (12) und Luftreifen (14), die dazu bestimmt ist, auf einem Boden (16) zu rollen, von der Art, die vom Rad (12) getragene Einrichtungen (20) zur Messung topologischer Parameter der Innenfläche (18) eines relevanten Bereichs (22) des Luftreifens (14) enthält, **dadurch gekennzeichnet, dass** die Messeinrichtungen (20) Einrichtungen (24) zur Beleuchtung und Sicht eines kalibrierten Oberflächenmusters (26) enthalten, das den Verformungen der Innenfläche (18) des relevanten Bereichs (22) des Luftreifens (14) ausgesetzt ist, wobei das kalibrierte Oberflächenmuster (26) ein nicht leuchtendes, aber ggf. reflektierendes Muster ist, das auf der Innenfläche (18) des relevanten Bereichs (22) des Luftreifens (14) angeordnet ist, und die Beleuchtungs- und Sichteinrichtungen (24) von der Art mit dreidimensionaler Sicht sind, die zwei vom Rad (12) getragene Videokameras (30) zur Erfassung von durch eine Pixelmatrix definierten Bildern enthalten, wobei die optischen Achsen (X) der zwei Kameras zum kalibrierten Oberflächenmuster (26) konvergieren, indem sie zum Beispiel zwischen sich einen Winkel (A) von 60° bilden.

2. Einheit aus Rad (12) und Luftreifen (14) nach Anspruch 1, bei der die Videokamera (30) in der Betriebsart "full frame" arbeitet, d.h. einer Betriebsart, bei der alle Pixel der Pixelmatrix gleichzeitig belichtet werden.

3. Einheit aus Rad (12) und Luftreifen (14) nach einem der Ansprüche 1 bis 2, die Einrichtungen (34) zur Erfassung des Kontakts des relevanten Bereichs (22) des Luftreifens (14) mit dem Boden (16) enthält, zum Beispiel von der Art mit Erfassung der Vertikalität oder Erfassung des Azimuts des Luftreifens.

4. Einheit aus Rad (12) und Luftreifen (14) nach einem der vorhergehenden Ansprüche, bei der die Videokamera (30) mit einem Objektiv einer Brennweite versehen ist, die an die Größe des Luftreifens angepasst ist, vorzugsweise eine kurze Brennweite.

5. Einheit aus Rad (12) und Luftreifen (14) nach einem der vorhergehenden Ansprüche, bei der die Beleuchtungs- und Sichteinrichtungen (24) eine Lichtquelle (32) enthalten, die aus einer Laserquelle und einer einen Blitz bildenden Elektrolumineszenzdiode ausgewählt wird.

6. Einheit aus Rad (12) und Luftreifen (14) nach einem der vorhergehenden Ansprüche, bei der das Muster (26) aus einem Schachbrettmuster und einem Sprenkelmuster ausgewählt, das von einer Gruppe von ungleichmäßig verteilten Punkten gebildet wird.

7. Einheit aus Rad (12) und Luftreifen (14), die dazu bestimmt ist, auf einem Boden (16) zu rollen, von der Art, die vom Rad (12) getragene Einrichtungen (20) zur Messung topologischer Parameter der Innenfläche (18) eines relevanten Bereichs (22) des Luftreifens (14) enthält, **dadurch gekennzeichnet, dass** die Messeinrichtungen (20) Einrichtungen (24) zur Beleuchtung und Sicht eines kalibrierten Oberflächenmusters (26) enthalten, das den Verformungen der Innenfläche (18) des relevanten Bereichs (22) des Luftreifens (14) ausgesetzt ist, wobei die Beleuchtungs- und Sichteinrichtungen (24) von der Art mit strukturiertem Licht sind und Einrichtungen (40) zur Projektion eines Lichtmusters auf die Innenfläche (18) des relevanten Bereichs (22) des Luftreifens (14) enthalten, das das kalibrierte Oberflächenmuster (26) bildet.

8. Einheit aus Rad (12) und Luftreifen (14) nach Anspruch 7, bei der die Innenfläche (18) des relevanten Bereichs (22) des Luftreifens (14) mit Markierungen (42) versehen ist, zum Beispiel mit drei Markierungen jeweils in der allgemeinen Form einer Kugelkalotte.

9. Einheit aus Rad (12) und Luftreifen (14) nach Anspruch 7 oder 8, bei der das Lichtmuster eine abwechselnde Anordnung von hellen und dunkeln Streifen enthält.

10. Einheit aus Rad (12) und Luftreifen (14) nach dem vorhergehenden Anspruch, bei der die Beleuchtungs- und Sichteinrichtungen (24) mindestens eine vom Rad (12) getragene Videokamera (30) zur Erfassung von Bildern enthalten, die von einer Pixelmatrix definiert werden, welche Zeilen und Spalten von Pixeln enthält, die bezüglich der Streifen parallel oder vorzugsweise um 45° geneigt sind.

11. Einheit aus Rad (12) und Luftreifen (14) nach einem der vorhergehenden Ansprüche, bei der die Beleuchtungs- und Sichteinrichtungen geeignet sind, um einen Blitz einer Dauer von weniger als 10 µs zu senden.

12. Verfahren zur Dynamikmessung topologischer Parameter der Innenfläche (18) des relevanten Bereichs (22) des Luftreifens (14) einer Einheit nach einem der vorhergehenden Ansprüche, **dadurch gekennzeichnet, dass** Verformungen der Innenfläche (18) des relevanten Bereichs (22) des Luftreifens (14) mit Hilfe der Einrichtungen (24) zur Beleuchtung und Sicht des kalibrierten Oberflächenmusters (26) gemessen werden.

13. Verfahren nach Anspruch 12 zur Messung topologischer Parameter der Innenfläche (18) des relevanten Bereichs (22) des Luftreifens (14) einer Einheit nach den Ansprüchen 3 und 8 zusammen gesehen, bei dem die Lichtquelle (32) mit Hilfe der Einrichtungen (34) zur Erfassung des Kontakts des relevanten Bereichs (22) des Luftreifens (14) mit dem Boden gesteuert wird.

14. Verfahren nach Anspruch 12 zur Messung topologischer Parameter der Innenfläche (18) des relevanten Bereichs (22) des Luftreifens (14) einer Einheit nach den Ansprüchen 4 und 9 zusammen gesehen, bei dem die Projektionseinrichtungen (40) mit Hilfe der Einrichtungen (34) zur Erfassung des Kontakts des relevanten Bereichs (22) des Luftreifens (14) mit dem Boden gesteuert werden.

15. Verfahren nach einem der Ansprüche 12 bis 14 zur Messung topologischer Parameter der Innenfläche (18) des relevanten Bereichs (22) des Luftreifens (14) einer Einheit nach Anspruch 1, bei dem die Kamera (30) in der synchronen Betriebsart, d.h. mit konstanter Bilderfassungsfrequenz, unabhängig von der Stellung und der Drehgeschwindigkeit des Rads (12) betätigt wird.

16. Verfahren nach Anspruch 13 oder 14 in Kombination mit Anspruch 15, bei dem die erfassten Bilder sortiert werden, indem diejenigen ohne das Muster entfernt werden.

17. Verfahren nach einem der Ansprüche 12 bis 14 zur Messung topologischer Parameter der Innenfläche (18) des relevanten Bereichs (22) des Luftreifens (14) einer Einheit nach Anspruch 1, bei dem die Kamera (30) in der asynchronen Betriebsart, d.h. mit variabler Bilderfassungsfrequenz, die direkt oder indirekt in Abhängigkeit von der Stellung oder der Geschwindigkeit des Rads (12) gesteuert wird, betätigt wird.
